Europäisches Patentamt

(19) European Patent Office

Office européen des brevets

(11) Publication number: **0 017 090**
**B1**

# (12) EUROPEAN PATENT SPECIFICATION

(45) Date of publication of patent specification: **26.01.83**

(51) Int. Cl.³: **G 06 K 9/32**

(21) Application number: **80101459.8**

(22) Date of filing: **20.03.80**

(54) Method and apparatus for sensing a line of characters, and character recognition apparatus.

(30) Priority: **30.03.79 US 25436**

(43) Date of publication of application:
**15.10.80 Bulletin 80/21**

(45) Publication of the grant of the patent:
**26.01.83 Bulletin 83/4**

(84) Designated Contracting States:
**DE FR GB IT**

(56) References cited:
    US - A - 3 509 415
    US - A - 3 587 047
    US - A - 3 921 136
    US - A - 4 013 999
    US - A - 4 083 034

    IBM TECHNICAL DISCLOSURE BULLETIN, vol.
    13, nr. 2, July 1970
    ARMONK (US)
    J. E. CARRINGTON et al.: "Line finding by
    profile analysis", pages 351—352

(73) Proprietor: **International Business Machines
Corporation
Armonk, N.Y. 10504 (US)**

(72) Inventor: **Jih, Chentung Robert
3805 Thousand Oaks Drive
San Jose, California (US)**

(74) Representative: **Lancaster, James Donald
IBM United Kingdom Patent Operations Hursley
Park
Winchester Hants SO21 2JN (GB)**

(56) References cited:
    **PROCEEDINGS I.R.E.E. AUSTRALIA, October
    1970
    CANBERRA (US)
    J. WILSON: "The recognition of handwritten
    words using a line-follower", pages 339—344**

## Method and apparatus for sensing a line of characters, and character recognition apparatus

This invention is applicable in character recognition systems, one example being Optical Character Recognition (OCR) systems. It particularly concerns determining the baseline of a line of characters, which may include characters of different height, characters extending below the baseline, characters with subscripts, or underlined characters as an aid to the process of recognising the characters.

There are many types of character recognition systems known in the prior art. Typically in such systems, a scanning means such as a flying spot optical scanner scans a medium on which characters are stored and provides one type of output electrical signal in response to the scan of the character and another type of output electrical signal in response to a scan of the background. The character recognition logic receives the scanner output signals and makes a decision as to the character identity. As examples, optical scanners may distinguish black characters from white background, or vice versa, and magnetic scanners may distinguish between characters written with magnetic ink and the non-magnetic background. Since the signals from the scanner output only inform the logic whether the scanner is instantaneously viewing a spot on the character or a spot on the background, it is necessary to provide position signals to the recognition logic. The position information supplied corresponds to the movement of the scanner.

The scanner usually performs a patterned scan which covers a certain area. In some systems, an entire line may be scanned, using a buffer for storing the information. In other systems, scanning occurs one vertical line of a character at a time. In these latter systems, the patterned scan of one character in a line is followed by the patterned scan of the next character in the line, and so on. When the scan reaches the end of a line it moves to the next line and begins again. In an office environment, most documents are machine printed in single font style with a fixed pitch, usually on a typewriter. The documents have relatively good print quality and the text contains an inherent systematic grid pattern according to the fixed pitch and line spacing defined by the printing mechanism. Common baselines can be easily visualized from each line of printed characters. Baseline can be imagined for example as the bottom horizontal line to a line of uppercase characters, but also of course exists for lines comprising both upper and lower case characters. The fixed pitch property has been widely used for segmentation, but identification of baseline as such does not appear to have been mentioned much in the prior art. Segmentation refers to the separation of one character or mark from another, either vertically or horizontally, and registration refers to the positioning of the scanning device over the character or mark to be sensed. Possible reasons for not using baseline information in OCR applications are:

1. Some OCR systems are designed for recognizing a line of characters with a special mark at the beginning. The mark is used to assist the OCR machine locate the characters and keep the line skew under control.

2. For some OCR applications, the spacing between lines of printed characters is big enough and/or no underscores and sub or super scripts are allowed in the text. Therefore, character images will never touch vertically with any other characters above or below.

Due to the intrinsic grid pattern existing on most office documents, segmentation may seem to be straight-forward. However, it still has its own typical problems on line skew which may be generated originally in the printing process or caused by unaligned scanning, and problems on vertically touching images due to the presence of underscore and sub or super scripts. As to registration, the regular simple boxing technique, in which the OCR scanner is physically moved to locate it over the center of a character, will not be able to properly register the character images with edge noise or with missing strokes. Besides, boxing registration loses character vertical position information which is quite important for character recognition on some font styles. Under these circumstances, baseline information is found to be very useful to handle these problems efficiently and effectively. Also, baseline information can avoid the need for sophisticated line finding programs for segmenting office-generated documents.

Our European Patent Application 79105173.3 (EP—A1—0014758) describes a particular optical character recognition system using a row of light sensitive photocells which reads a line of numerals on a moving document. All of the numerals are of the same height and on the same baseline, and none will extend below that baseline except through a printing fault such as an ink splash. Scanning occurs one vertical line of a numeral at a time along its line. A segmenting unit determines from the data the horizontal and vertical boundaries of each numeral. The description indicates that in the case of one illustrated numeral which has a "noise" area (e.g. an ink splash) at its bottom edge, the correct vertical boundaries can be identified from consideration that all numerals should be of the same height, and from comparison with the lower vertical boundaries of other characters. A computer determines for each numeral the coordinates of a respective reference starting point, which coordinates are used by a recognition unit in the subsequent recognition process for the respective numeral.

United States patent 3,921,136 discloses a character recognition method and apparatus according to the pre-characterising parts of claims 1 and 3. This patent does not discuss underlined characters; also it requires a sub-group of two fixed sensor elements in any array which are used for locating baseline, these two sensor elements operating an automatic mechanism so that the lowest character parts of lowercase characters without descenders terminate between the two sensor elements. The number of sensor elements in the sub-group is restricted to two, and the position of the sub-group in the array cannot be varied. These limitations are removed by the method and the apparatus presented in the characterising parts of claims 1 and 3.

In Proceedings IREE Australia October 1970, J. Wilson "The Recognition of Handwritten Words Using a Line Follower" pages 339—344, vertical histograms of characters of a word are generated to determine base line. Each vertical "bar" contains information from part of one character only. In the present invention, horizontal histograms are determined, each always involving a plurality of characters, and this technique is not foreshadowed by the above article.

Other aspects of the invention are set out in the appended claims, and include a character recognition apparatus.

Depending upon the basic character font design, each character has a specific vertical position relative to a common writing line or base-line. Most characters are located right on the baseline, for example, A, E, P, whereas some have portions extending below the baseline, for example, j, g, /, etc. In accordance with a particular embodiment of the invention described hereinafter, two techniques are used which can be regarded as detecting the imaginary baseline. The first, which may be called coarse prediction, involves making a horizontal projection frequency distribution or density histogram of the scanned material. If such a histogram is made for successive part lengths of a line of characters, say for every 10 consecutive characters, a peak usually is found at the lower portion of each histogram. That peak is a good estimate of the averaged baseline elevation for the associated group of characters. An averaged baseline elevation for an entire print line can be similarly estimated from a total horizontal density histogram, or by taking the average of the set of baseline elevation estimates detected from each partial line histogram. This set of baseline elevation estimates can also be used to reveal some information about the skew of the line.

The second technique used may be called detail detection, and in this technique the outputs of certain ones of the sensor elements, forming an imaginary window, are examined to search for the baseline of each character image, allowing some possibility of skew of the print line. For the first print line of a document, an estimated baseline elevation can be determined by the method of coarse prediction as described above to determine which sensor elements form the window for that line, or it can be introduced manually by aligning the document to a horizontal reference. For the following print lines, the baseline elevation can be directly estimated by calculating the difference of the standard line spacing, say 1/6 inch, from the baseline elevation used for the previous line. The window includes the baseline and its immediate neighborhood. The height of the window allows the possibility of a limited amount of skew of the baseline. The lowest black bit found in the window for each vertical scan of the line is identified and the baseline is determined from the succession of these lowest black bits. According to one possible technique, the average of the lowest black bit positions over a number of characters can be treated as the baseline elevation for the associated characters. This averaging technique can minimize error that might arise from characters with portions extending below the baseline.

Piecewise baseline information across an entire print line will reveal the skew of that line. Such skew measurement, e.g. using the coarse technique mentioned above, is useful in enabling the OCR system to decide whether realignment of the document is required to correct any severe skew exceeding a predetermined value prior to further scanning. Skew information may also assist in segmentation.

Baseline information including possible skew may be used to define the domain for horizontal segmentation. Horizontal segmentation means the segmentation required to separate the horizontally neighboring characters printed on one line. Similarly, vertical segmentation is to separate a character from any images associated with the previous or the following print line. The presence of contiguous underscores can make adjacent character images look like one character image. It may be desirable to separate and isolate an underscore from the character fields both above and below that underscore when horizontal segmentation is taking place. In other words, referring to the standard 10-pitch Courier 72 font design, underscore is located at about 1.2 mm (49 mils) below the baseline. The baseline information and maximum character height, or line spacing, can be utilized to exclude underscores when defining the upper and lower boundaries of the domain for horizontal segmentation of the line. Similar techniques can be applied to segment domains for sub and super scripts.

Baseline information is also useful in recognising individual characters. Since the baseline is determined from a plurality of characters in a line that determination will be less sensitive to edge noise i.e. print faults of individual characters in the line which might make those characters difficult to recognise.

Moreover, baseline information can be used by the recognition logic, for example to distinguish between an apostrophe and a comma which have the same shape for some fonts, or between certain similarly shaped lowercase and uppercase letters. For these problems, baseline positional information is helpful to distinguish the two.

As mentioned above, the baseline position allows the position of the next baseline to be predicted according to the standard line-to-line distance, for example, six lines per inch. As a result of such prediction, the next baseline searching window can be properly located. The actual baseline measurement can be used to update the prediction. Such interactive process makes the system capable of dealing with any cumulative error on the documents due to deviations in the line-to-line distance from the standard.

## The Drawings

FIG. 1 is a diagram showing an array of sensor elements in relation to a portion of a printed line to be scanned;

FIG. 2 is a series of histograms representing successive portions of the scanning of a printed line;

FIG. 3 is a block diagram illustrating character recognition apparatus in accordance with this invention; and

FIG. 4 illustrates part of the operation of the apparatus of FIG. 3.

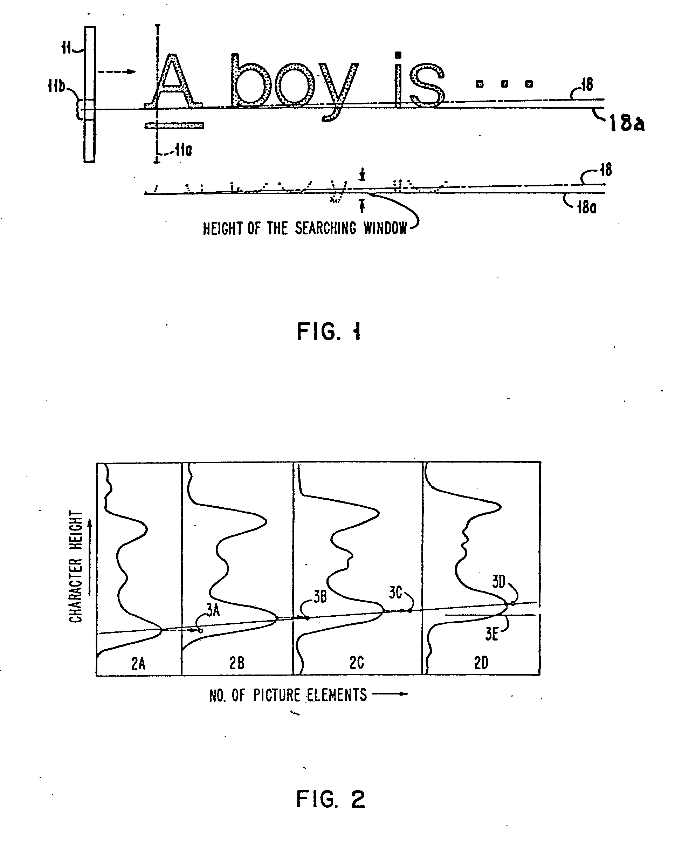

Referring to FIG. 1, a linear scanner array is shown schematically at 11 in relation to a portion of a line of print to be scanned. Array 11 may be of any suitable type used for optical character recognition such as a Reticon C Series Solid State Line Scanner, manufactured by Reticon Corp., Mt. View, California. As is well known, scanner 11 includes a suitable number, such as 64, of separate light sensor elements arranged vertically of the line to be scanned. Each element in the array 11 produces an output signal which is a measure of the amount of light reflected from the portion of the scanned document associated with that element. The output signals from the elements of array 11 are converted to signals indicating either a light or dark condition of the scanned area, and in the present description it will be assumed that signals from dark or printed areas i.e. character parts, of the scanned document will produce a binary "one" or black bit signal, while signals from light or background areas of the scanned document produce a binary "zero". Array 11 is arranged to perform a vertical scan which extends above and below the line to be scanned, as represented by 11a.

Certain ones of the sensor elements in array 11, which can be varied as will become apparent, function as a baseline searching window. In FIG. 1, these elements are identified as 11b and are located in part of the lower half of array 11. For instance, in an array containing 64 sensor elements, 6 of these elements can be used for the group 11b. FIG. 1 will be discussed further in connection with detail baseline detection.

The principles involved in performing a coarse baseline prediction are indicated in FIG. 2, which is a series of horizontal density histograms for a scanned line of characters, each separate frame 2A, 2B, 2C, 2D representing a consecutive scan of the same length, including a number of characters, along the line. Each frame contains a plot of the number of picture element signals received by the scanner as a function of character or line height above a reference line which is parallel to the lines sensed by the sensor elements. The peak in the lower portion of the histogram is used as the predicted location of the baseline. Thus, for the histogram of frame 2A, point 3A represents the predicted baseline elevation, point 3B represents the predicted baseline elevation for frame 2B, etc. The points 3A, 3B, 3C and 3D are equally spaced. By averaging the histograms for the entire line, a predicted mean baseline elevation for the entire line can be generated, as represented by line 3E in frame 2D (mid-way between the heights of points 3B and 3C), and the skew for the predicted baseline is represented by the difference between line 3E and the line connecting points 3A, 3B, 3C and 3D. This technique assumes that the line of characters is not continuously underlined.

FIG. 3 illustrates a particular embodiment of the invention in the form of character recognition apparatus. The output from scanner 11 is supplied to a threshold buffer 12 which converts the signals from the sensors in array 11 to binary ones or zeroes corresponding to signals from dark or light areas of the scanned document, as discussed above, and temporarily stores them. The buffer 12 provides an input to a horizontal projection histogram generator 13, which is capable of appropriately counting the signals from buffer 12 and generating signals corresponding to the histograms of FIG. 2 indicative of the location of the peak value in each segment of the line of characters. Generator 13 may also indicate the location of the peak value for the entire scanned line. The output from generator 13 is supplied as the input to a baseline prediction and skew measurement network 14 which utilizes the signal from generator 13 to produce predicted values for the baseline location and a measure of the skew of the predicted baseline, as shown in FIG. 2. The output from network 14 is supplied as an input to a character recognition processor 16 which may utilize this information in various ways. For example if the predicted baseline skew measurement exceeds a predetermined value, the operation of the apparatus can be halted, automatically, or manually in response to a warning signal, to allow repositioning of the line of characters being sensed e.g. by repositioning the document being sensed.

Detailed baseline detection may be understood by reference to FIGS. 1, 3 and 4. The output from network 14 is also supplied to predicted baseline position generator 17, which generates a predicted baseline position signal representing, for example, the line 18 in FIG. 1. This last signal controls a search window selection circuit 31 which in effect determines which group of the sensor elements of array 11 shall be the search window for a particular line scan. For the first line of a document, after the search window has been determined as aforesaid, the buffer 12 is re-read and re-supplies its signals, in respect of that same first line, to enable detection of the lowest black bit position occurring in the search window per vertical line scan by array 11 as will be explained. The search window for the next line is determined to correspond to the predicted baseline position signal for the first line, it being assumed that the array 11 relatively moves a standard line spacing between lines. This search window determination is available when said next line is scanned, so that the need to re-read buffer 12 for this line or subsequent lines, is avoided.

As an alternative for the first line of a document, the array 11 can be manually positioned to visually align the midpoint of a predetermined group of sensor elements approximately with the baseline of that first line, and search window selection circuit 31 can produce an output corresponding to the selection of that predetermined group of sensor elements as the search window. During the first line scan, the predicted baseline position for the next line is determined as explained above, using the coarse baseline prediction technique, which determines the search window for the next line. Again, after the array 11 has scanned one line, it is moved relatively to the document one standard line spacing.

As regards detecting the lowest black bit position occurring in the search window per vertical line scan by array 11, the effect of the search window can be appreciated from FIG. 1. For the printed line shown in FIG. 1, which begins with "A Boy is . . .", the lowest black dot position occurring in the search window 11b for each vertical scan is shown immediately below. In this connection, it will be seen in FIG. 1 that the lower portion of the letter "y" in "boy" extends substantially below the predicted baseline 18, and if a search window was not used, would produce low black bit positions considerably below those of the surrounding letters. However, only the low black bit positions associated with the letter "y" which are within searching window 11b are detected so that the line 18a representing these low black bit positions corresponds generally to the overall bottom positions of each letter on the line.

In general terms, the line of characters may include characters of the same height which do not extend below the baseline, characters of different height, characters extending below the baseline, characters with subscripts, or underlined characters. The lowest character parts of the character portions occurring in a narrow band extending along the line of characters and including the baseline are determined from the outputs of certain ones i.e. the search window, of the sensor elements. Characters which extend below the baseline, or subscripts of characters, and which are wholly or partly intersected by the band, provide apparent lowest character parts at the bottom edge of the band, or actual lowest character parts within the band.

Circuitry for detecting the lowest black bit position is shown in FIG. 3 and includes a shift register 26 which receives the digitized scanner output signals from buffer 12. Shift register 26 operates to shift the bits in the buffer output by one position and to supply the shifted bits as one input B to an exclusive OR gate 27. Gate 27 receives the output of buffer 12 as another input A.

The output of gate 27 is supplied as one input C to an AND gate 28, gate 28 also receiving the input A from buffer 12. The output of gate 28 is supplied as an input D to an AND gate 29 which receives an input E from search window selection circuitry 31. Circuitry 31 is controlled by the indication of predicted baseline position from box 17 and operates to open gate 29 during the period of each vertical scan when those signals of output A associated with the sensor elements in array 11 functioning as the search window are being received by gate 29. The output F of gate 29 is a succession of lowest black bit positions occurring in the searching window, for the successive vertical scans, and these are supplied to an averaging circuit 32 which operates to average the lowest black bit position information for each scanned line or portion thereof to provide a determination of baseline position to OCR processor 16. By averaging for successive portions of the line, the skew of the baseline can be obtained as previously explained. Segmentation and recognition of character images takes place in the OCR processor 16 in response to the determined baseline position, and to the sensor element outputs represented by the signals A transmitted from buffer 12 to processor 16 (by a line not shown in FIG. 3).

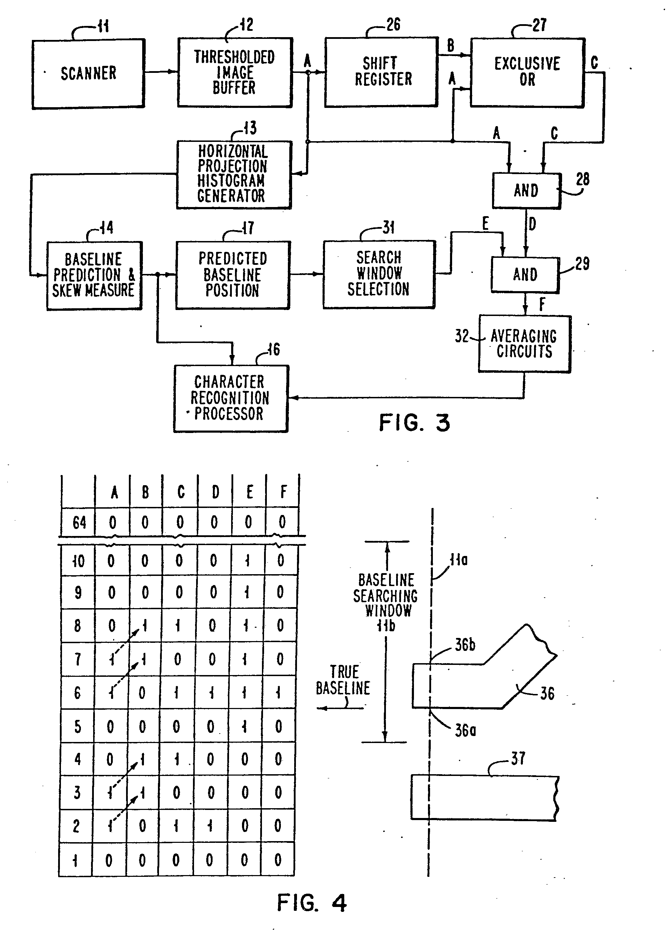

The operation of the detail baseline detection and its ability to separate underlinings from associated characters is shown in FIG. 4 in relation to scanning the line shown in FIG. 1. in FIG. 4, reference 36 identifies the lower left leg of the letter "A" in "A Boy is . . ." shown in Fig. 1, and 37 identifies the underscoring which is under the "A" in this line. The positions of the sensor elements in array 11 are represented by the numbers 1—64 in the left hand column, only sensors 1—10 and 64 being shown to reduce the size of the figure. The outputs representing the signals A—F of FIG. 3 are shown in correspondingly labelled columns of

## FIG. 4.

The representational position of baseline searching window 11b is shown in FIG. 4 and it can be seen that this window corresponds to the positions of sensor elements 5—10 in array 11. The signals in the different columns A—F correspond to their values when scanner array 11 is at the position represented by line 11a in FIG. 4. In column A it will be seen that black bits are produced by sensor elements 6 and 7, representing the leg portion of the 36 of the letter "A", and by sensor elements 2 and 3, representing the underscoring 37 beneath leg 36. The signals of column A are supplied to shift register 26 of FIG. 3 which operates to shift the signals left or up one position, as shown by the arrows.

The signals represented by column B are supplied to exclusive OR gate 27 along with the signals A from buffer 12. The output of gate 27 is represented by column C in FIG. 4, containing bits in sensor element positions 2, 4, 6 and 8. This output C is then supplied to AND gate 28 along with signal A from buffer 12 to produce the signals shown in column D, having bits at positions 2 and 6.

Signals D are supplied to AND gate 29 along with signals E from search window selection circuitry 31. Since the baseline searching window in this example is assumed to extend across sensor elements 5—10, circuitry 31 generates bits in positions 5—10 as shown in column E. The output F from gate 29 contains a single bit at sensor position 6 and it will be seen that this corresponds to the location of the bottom of leg 36 and hence represents the true baseline for leg 36 and letter "A".

From FIG. 4, the apparatus can be regarded as operating to detect and locate the transition 36a from black to white (taking a downward scan) on the lower portion of leg 36 and to disregard the transition 36b from white to dark on the upper portion of leg 36. By establishing the alignment and width of the baseline search window to exclude underscoring 37, a more accurate baseline is detected rather than obtaining an indication that underscoring 37 represented the location of the baseline at scan line 11a. Since the apparatus distinguishes between the character and its associated underscoring, the apparatus can present the character itself to the recognition processor for recognition with or without the associated underscoring.

Various alternatives and modifications can be made to the above apparatus and its operation. For example the coarse baseline prediction involving determining one or more frequency distributions or histograms is not necessary, e.g. particularly with a line of characters which is continuously underlined. Thus the scanner 11 can be manually positioned for the first line of characters corresponding to a predetermined search window for that first line, as already indicated. The search window for the next line will then be determined by controlling the search window selection circuit 31 according to a detail baseline elevation measure obtained from averaging circuits 32, it being assumed that scanner 11 is moved relatively one standard line spacing from the line of characters to the next line.

Other possibilities exist for the averaging circuits 32. For example a line fitting technique can be used to obtain the baseline from the succession of determined lowest character parts.

## Claims

1. Method of sensing a line of characters which may include characters of the same or different height, characters extending below the baseline (18a), characters with subscripts, or a low number of underlined characters; in which an array (11) of sensor elements relatively sweeps along said line, each sensor element producing an output indicative of whether it currently senses a part of a character, or background, there being a sub-group (11b) of sensor elements in the array which sweeps a narrow band extending along the line of characters and including the baseline, which sub-group is for locating the baseline, the alignment and width of the band being such that any underlinings of the characters in the line are outside the band, the relative alignment of the band to the characters being adjusted so that the subgroup determines the lowest character parts of those characters which extend to but do not extend below the baseline; characterised in that the number of sensor elements in the sub-group is selected, this number not being restricted to a particular number, and the position of the sub-group in the array, and hence the alignment of the band is determined from a mean coarse baseline height measurement (3E, Fig. 2), relative to a reference line parallel to the lines sensed by the sensor elements, established by determining one or more frequency distributions (2A, 2B, 2C, 2D, Fig. 2) for character parts according to height relative to such reference line, where if one frequency distribution is determined it involves a plurality of characters throughout the line, or a preceding line, or where if several frequency distributions are determined each involves a plurality of characters in a different segment of the line, or a preceding line, the number of any underlined characters being sufficiently low so that the underlinings do not dominate said frequency distributions, characters which extend below the baseline, or subscripts of characters, which wholly or partly intersect the band providing apparent lowest character parts at the bottom edge of the band, or actual lowest character-parts within the band, the baseline being determined from the succession of determined lowest character parts.

2. Method as claimed in claim 1, in which a plurality of said frequency distributions are determined, from which a coarse baseline skew measurement is derived, the method being halted if said coarse baseline skew measurement exceeds a predetermined value, to allow repositioning of the line of characters being sensed.

3. Apparatus for sensing a line of characters which may include characters of the same or different height, characters extending below the baseline (18a), characters with subscripts, or a low number of underlined characters; including means for relatively sweeping an array (11) of sensor elements along said line, each sensor element serving to produce an output indicative of whether it currently senses a part of a character or background, there being a sub-group (11b) of sensor elements in the array which sweeps a narrow band extending along the line of characters and including the baseline, which sub-group is coupled to means (27, 28, 29, 32) for locating the baseline, the alignment and width of the band being such that any underlinings of the characters in the line are outside the band, the relative alignment of the band to the characters being adjusted by means (31) so that the sub-group determines the lowest character parts of those characters which extend to but do not extend below the baseline; characterised in that the number of sensor elements in the sub-group is selected, this number not being restricted to a particular number, and the position of the sub-group in the array, and hence the alignment of the band is determined by means (13, 14, 17) for establishing a mean coarse baseline height measurement (3E, Fig. 2), relative to a reference line parallel to the lines sensed by the sensor elements, by determining one or more frequency distributions (2A, 2B, 2C, 2D, Fig. 2) for character parts according to height relative to said reference line, where if one frequency distribution is determined it involves a plurality of characters throughout the line, or a preceding line, or where if several frequency distributions are determined each involves a plurality of characters in a different segment of the line, or preceding line, the number of any underlined characters being sufficiently low so that the underlinings do not dominate said frequency distributions, said means (27, 28, 29) providing from characters extending below the baseline, or subscripts of characters, which wholly or partly intersect the band, apparent lowest character parts at the bottom edge of the band, or actual lowest character parts within the band, and including means (32) for determining the baseline from the succession of determined lowest character parts.

4. Apparatus as claimed in claim 3 in which said means (27, 28, 29) comprises logic circuitry for determining the lowest character parts occurring in said band.

5. Character recognition apparatus including apparatus as claimed in claim 3 or 4 and a character recognition device (16) responsive to the sensor element outputs, and to the determined baseline.

## Revendications

1. Procédé de détection d'une ligne de caractères qui peut comporter des caractères de même hauteur ou de hauteurs différentes, des caractères s'étendant au-dessous de la ligne de base (18a), des caractères comportant des souscrits ou un faible nombre de caractères soulignés; procédé dans lequel un ensemble (11) d'éléments de détection balaie chaque ligne selon un déplacement relatif, chacun desdits éléments produisant une sortie qui indique s'il est en train de détecter une partie d'un caractère, ou un fond, ledit ensemble comportant un sous-groupe (11b) d'éléments de détection qui balaie une bande étroite qui s'étend le long de la ligne de caractères et qui comprend la ligne de base, ledit sous-groupe ayant pour objet de localiser la ligne de base, l'alignement et la largeur de la bande étant tels que tout soulignement des caractères que comporte la ligne se trouve à l'extérieur de la bande, l'alignement relatif de cette dernière par rapport aux caractères étant ajusté de telle sorte que le sous-groupe détermine les parties les plus basses de ceux des caractères qui s'étendent jusqu'à la ligne de base, mais non au-dessous de cette dernière; ledit procédé étant caractérisé en ce qu'on choisit le nombre d'éléments de détection que comporte le sous-groupe, ce nombre n'étant pas limité à une valeur particulière, et en ce qu'on détermine la position qu'occupe le sous-groupe dans l'ensemble, et par conséquent l'alignement de la bande, à partir d'une mesure moyenne grossière de la hauteur de la ligne de base (3E, figure 2), relativement à une ligne de référence parallèle aux lignes détectées par lesdits éléments, établie en déterminant une ou plusieurs distributions de fréquences (2A, 2B, 2C, 2D, figure 2) pour les différentes parties des caractères en fonction de la hauteur par rapport à ladite ligne de référence, où, si une seule distribution de fréquences est déterminée, celle-ci affecte plusieurs des caractères de la ligne, ou d'une ligne précédente, et où, si plusieurs distributions de fréquences sont déterminées, chacune de ces dernières affecte plusieurs caractères dans un segment différent de la ligne ou d'une ligne précédente, le nombre de caractères soulignés étant suffisamment faible pour que les soulignements ne dominent pas lesdites distributions de fréquences, les caractères qui s'étendent au-dessous de la ligne de base, ou les parties souscrites de caractères, qui pénètrent dans la bande ou qui traversent celle-ci, constituant les parties apparemment les plus basses des caractères au niveau du bord inférieur de la bande, ou constituant les parties effectivement les plus basses des caractères à l'intérieur de la bande, la ligne de base étant définie à partir de la suite ainsi déterminée de parties les plus basses des caractères.

2. Procédé selon la revendication 1, caractérisé en ce que l'on détermine plusieurs desdites distributions de fréquences à partir desquelles on obtient une mesure grossière de l'obliquité de la ligne de base, la mise en oeuvre dudit procédé étant interrompue si ladite mesure dépasse une valeur prédéterminée, afin de permettre un repositionnement de la ligne de caractères détectée.

3. Dispositif de détection d'une ligne de caractères qui peut comporter des caractères de même hauteur ou de hauteurs différentes, des caractères s'étendant au-dessous de la ligne de référence (18a), des caractères comportant des souscrits ou un faible nombre de caractères soulignés; ledit dispositif comportant des moyens pour provoquer le balayage de ladite ligne, selon un déplacement relatif, par un ensemble (11) d'éléments de détection, chacun desdits éléments produisant une sortie qui indique s'il est en train de détecter une partie d'un caractère, ou un fond, ledit ensemble comportant un sous-groupe (11b) d'éléments de détection qui balaie une bande étroite qui s'étend le long de la ligne de caractères et qui comprend la ligne de base, ledit sous-groupe étant connecté à des moyens (27, 28, 29, 32) servant à localiser la ligne de base, l'alignement et la largeur de la bande étant tels que tout soulignement des caractères que comporte la ligne se trouve à l'extérieur de la bande, l'alignement relatif de cette dernière par rapport aux caractères (13) étant ajusté par des moyens (31) de telle sorte que le sous-groupe détermine les parties les plus basses de ceux des caractères qui s'étendent jusqu'à la ligne de base, mais non au-dessous de cette dernière; ledit dispositif étant caractérisé en ce que le nombre d'éléments de détection que comporte le sous-groupe est choisi, ce nombre n'étant pas limité à une valeur particulière, et en ce que la position qu'occupe le sous-groupe dans l'ensemble, et par conséquent l'alignement de la bande, sont déterminés par des moyens (13, 14, 17) permettant d'établir une mesure moyenne grossière de la hauteur de la ligne de base (3E, figure 2), par rapport à une ligne de référence parallèle aux lignes détectées par lesdits éléments, établie en déterminant une ou plusieurs distributions de séquences (2A, 2B, 2C, 2D, figure 2) pour les différentes parties des caractères en fonction de la hauteur par rapport à ladite ligne de référence, où, si une seule distribution de fréquences est déterminée, celle-ci affecte plusieurs des caractères de la ligne, ou d'une ligne précédente, et où, si plusieurs distributions de fréquences sont déterminées, chacune de ces dernières affecte plusieurs caractères dans un segment différent de la ligne ou d'une ligne précédente, le nombre de caractères soulignés étant suffisamment faible pour que les soulignements ne dominent pas lesdites distributions de fréquences, lesdits moyens (27, 28, 29) permettant d'obtenir, à partir des caractères qui s'étendent au-dessous de la ligne de base ou des parties souscrites de caractères qui pénètrent dans la bande ou traversent celle ci, les parties apparemment les plus basses des caractères au niveau du bord inférieur de la bande, ou les parties effectivement les plus basses des caractères à l'intérieur de la bande, la ligne de base étant définie à partir de la suite ainsi déterminée de parties les plus basses des caractères.

4. Dispositif selon la revendication 3, caractérisé en ce que lesdits moyens (27, 28, 29) comportent des circuits logiques permettant de déterminer les parties les plus basses des caractères qui existent dans ladite bande.

5. Dispositif de reconnaissance de caractères comprenant un dispositif selon la revendication 3 ou 4 et dispositif de reconnaissance de caractères (16) répondant aux sorties des éléments de détection et à la ligne de base déterminée.

**Patentansprüche**

1. Verfahren zur Abtastung einer Zeile, die Zeichen enthalten kann, die gleiche oder unterschiedliche Höhe aufweisen, sich unterhalb einer Grundlinie (18a) erstrecken, Indizes haben oder die eine geringe Anzahl unterstrichener Zeichen enthalten kann, bei dem eine Anordnung (11) von Sensorelementen sich relativ längs der Zeile bewegt, jedes Sensorelement ein Ausgangssignal erzeugt, das angibt, ob es augenblicklich einen Teil eines Zeichens oder den Hintergrund abfühlt, wobei eine Untergruppe (11b) von Sensorelementen in der Anordnung vorgesehen ist, die sich längs eines schmalen Bandes längs der Zeichenzeile bewegt, das die Grundlinie einschließt, wobei die Untergruppe zur Lokalisierung der Grundlinie dient und die Ausrichtung und Breite des Bandes so getroffen ist, daß Unterstreichungen von Zeichen in der Zeile außerhalb des Bandes liegen und die relative Ausrichtung des Bandes auf die Zeichen derart justiert ist, daß die Untergruppe die tiefsten Teile derjenigen Zeichen bestimmt, die sich bis aber nicht unter die Grundlinie erstrecken, dadurch gekennzeichnet, daß die Zahl der Sensor-elemente in der Untergruppe wählbar aber nicht auf eine bestimmte Anzahl beschränkt ist, und die Lage der Untergruppe in der Anordnung und somit die Ausrichtung des Bandes von einer mittelgroben Grundlinien-Höhenmessung (3E; Fig. 2), relativ zu einer Bezugszeile parallel zu den von den Sensorelementen abgefühlten Leitungen bestimmt wird, wobei die Messung durch Bestimmung einer oder mehrerer Frequenzverteilungen (2A, 2B, 2C, 2D; Fig. 2) für Zeichenteile gemäß der Höhe relativ zur genannten Bezugszeile bestimmt ist, wo, wenn eine Frequenzverteilung bestimmt wird, dieses mehrere Zeichen längs der Zeile oder eine vorhergehende Zeile bedingt, oder wo, wenn mehrere Frequenzverteilungen bestimmt werden, jede mehrere Zeichen in einem unterschiedlichen Segment der Zeile oder einer vorhergehenden Zeile bedingt und die Anzahl unterstrichener Zeichen ausreichend gering ist, so daß die Unterstreichungen die Frequenzverteilungen nicht dominieren und Zeichen, die sich unter die Grundlinie erstrecken oder Indizes von Zeichen, die ganz oder teilweise das Band schneiden offensichtlich die niedrigsten Zeichenteile an der unteren Kante des Bandes oder die tatsächlich niedrigsten Zeichenteile innerhalb des Bandes aufweisen, die Grundlinie bestimmt wird von der Aufeinanderfolge von den bereits bestimmten niedrigsten Zeichenteilen.

2. Verfahren nach Anspruch 1, in dem mehrere Frequenzverteilungen bestimmt werden, aus denen eine Versatzmessung der Rohgrundlinie abgeleitet wird, wobei das Verfahren angehalten wird, wenn die Versatzmessung der Rohgrundlinie einen vorgegebenen Wert überschreitet, um eine Repositionierung der abgefühlten Zeichenzeile zu ermöglichen.

3. Einrichtung zum Abtasten einer Zeile, die Zeichen enthalten kann, die gleiche oder unterschiedliche Höhe aufweisen, sich unterhalb einer Grundlinie (18a) erstrecken, Indizes haben oder die eine geringe Anzahl unterstrichener Zeichen enthalten kann, bei dem eine Anordnung (11) von Sensorelementen sich relativ längs der Zeile bewegt, jedes Sensorelement ein Ausgangssignal erzeugt, das angibt, ob es augenblicklich einen Teil eines Zeichens oder den Hintergrund abfühlt, wobei eine Untergruppe (11b) von Sensorelementen in der Anordnung vorgesehen ist, die sich längs eines schmalen Bandes längs der Zeichenzeile bewegt, das die Grundlinie einschließt, wobei die Untergruppe zur Lokalisierung der Grundlinie dient und die Ausrichtung und Breite des Bandes so getroffen ist, daß Unterstreichungen von Zeichen in der Zeile außerhalb des Bandes liegen und die relative Ausrichtung des Bandes auf die Zeichen derart justiert ist, daß die Untergruppe die tiefsten Teile derjenigen Zeichen bestimmt, die sich bis aber nicht unter die Grundlinie erstrecken, dadurch gekennzeichnet, daß die Zahl der Sensorelemente in der Untergruppe wählbar aber nicht auf eine bestimmte Anzahl beschränkt ist, und die Lage der Untergruppe in der Anordnung und somit die Ausrichtung des Bandes von einer mittelgroben Grundlinien-Höhenmessung (3E; Fig. 2), relativ zu einer Bezugszeile parallel zu den von den Sensorelementen abgefühlten Leitungen bestimmt wird, wobei die Messung durch Bestimmung einer oder mehrerer Frequenzverteilungen (2A, 2B, 2C, 2D; Fig. 2) für Zeichenteile gemäß der Höhe relativ zur genannten Bezugszeile bestimmt ist, wo, wenne eine Frequenzverteilung bestimmt wird, dieses mehrere Zeichen längs der Zeile oder eine vorhergehende Zeile bedingt, oder wo, wenn mehrere Frequenzverteilungen bestimmt werden, jede mehrere Zeichen in einem unterschiedlichen Segment der Zeile oder einer vorhergehenden Zeile bedingt und die Anzahl unterstrichener Zeichen ausreichend gering ist, so daß die Unterstreichungen die Frequenzverteilungen nicht dominieren und Zeichen, die sich unter die Grundlinie erstrecken oder Indizes von Zeichen, die ganz oder teilweise das Band schneiden offensichtlich die niedrigsten Zeichenteile an der unteren Kante des Bandes oder die tatsächlich niedrigsten Zeichenteile innerhalb des Bandes aufweisen, die Grundlinie bestimmt wird von der Aufeinanderfolge von den bereits bestimmten, niedrigsten Zeichenteilen.

4. Einrichtung nach Anspruch 3, bei der die genannten Mittel (27, 28, 29; Fig. 3) eine Logikschaltung für die Bestimmung der niedrigsten Zeichenteile, die in dem genannten Band auftreten, enthalten.

5. Zeichenerkennungseinrichtung mit einer Einrichtung nach Anspruch 3 oder 4 und einer Zeichenerkennungsvorrichtung (15), die auf die Ausgangssignale der Sensorelemente und auf die ermittelte Grundlinie anspricht.

FIG. 1

FIG. 2

CHARACTER HEIGHT

NO. OF PICTURE ELEMENTS ⟶

HEIGHT OF THE SEARCHING WINDOW

FIG. 3

FIG. 4

2